# EUROPÄISCHE PATENTANMELDUNG

(11) **EP 2 639 515 A1**
(43) Veröffentlichungstag der Anmeldung: **18.09.2013**
(21) Anmeldenummer: 13157792.6
(22) Anmeldetag: 05.03.2013
(51) Int. Cl.: F24C 15/16, A47J 37/06, A21B 3/15

(54) **Gargutträger sowie Gargerät mit einem Gargutträger**

(30) Priorität: 16.03.2012 DE 102012204236
(71) Anmelder: BSH Bosch und Siemens Hausgeräte GmbH, 81739 München (DE)
(72) Erfinder: Nather, Philipp, 83026 Rosenheim (DE)

(57) **Zusammenfassung**

Die Erfindung betrifft einen Gargutträger (1) für ein Gargerät der modular aufgebaut ist.

## Beschreibung

Die Erfindung betrifft einen Gargutträger als auch ein Gargerät mit einem derartigen Gargutträger.

Gargutträger für ein Gargut sind in vielfältiger Ausgestaltung bekannt. So sind in diesem Zusammenhang Ausgestaltungen als Gitterrost oder als Backblech oder als Fettpfanne oder dergleichen bekannt. Diese können üblicherweise in einen Garraum eingebracht werden, in dem dann das auf den Gargutträger aufgebrachte Gargut zubereitet wird.

Herkömmliche Gargutträger sind üblicherweise einstückige Teile, die in ihrer Formgebung und Größe unveränderbar sind. In diesem Zusammenhang sind sie üblicherweise maximal ausgelegt, um in einer Horizontalebene in dem Garraum größtmöglichen Platz zum Auflegen des Garguts oder eines Zubereitungsgefäßes mit dem Gargut bieten zu können. Sehr häufig wird jedoch diese gesamte Größe des Gargutträgers nicht benötigt. Darüber hinaus ist es gerade bei mehreren Gargutträgern, die in einen Garraum eingebracht sind, im Hinblick auf die Zugänglichkeit und Handhabung nachteilig. Ein Nutzer kann in diesem Zusammenhang nur schwer an die unteren Gargutträger gelangen, wenn darüber noch ein weiterer Gargutträger angeordnet ist. Darüber hinaus sind der oder die unter einem Gargutträger angeordneten weiteren Gargutträger abgedeckt, sodass auch die Einsicht durch einen Nutzer auf die unteren Gargutträger beschränkt ist.

Es ist Aufgabe der vorliegenden Erfindung, einen Gargutträger sowie ein Gargerät zu schaffen, welcher nutzerfreundlicher und flexibler verwendbar ist.

Diese Aufgabe wird durch einen Gargutträger und ein Gargerät gemäß den unabhängigen Ansprüchen gelöst.

Ein erfindungsgemäßer Gargutträger ist so ausgebildet, dass er in seiner Größe veränderbar ist und dazu modular aufgebaut ist. Eine derartige Ausgestaltung eines Gargutträgers ermöglicht im Hinblick auf Größe und Formgebung eine hohe Variabilität, sodass er diesbezüglich individuell gestaltbar und anpassbar ist. Dies kann im Hinblick auf spezifische Größen eines darauf angeordneten Garguts oder eines Zubereitungsgefäßes vorteilhaft sein. Insbesondere ist dies auch vorteilhaft, wenn mehrere Gargutträger in einem Garraum eines Gargeräts eingebracht werden und sowohl die Zugänglichkeit als auch die Einsicht in die jeweiligen Ebenen, auf denen die Gargutträger angeordnet sind, verbessert gegeben sein soll.

Darüber hinaus ist durch eine derartige Ausgestaltung eines Gargutträgers ein besonderer Vorteil auch darin zu sehen, dass diese Gargutträger äußerst kompakt und platzsparend gestaltet werden können, sodass sie auch platzsparend anderweitig und somit nicht im Garraum selbst aufbewahrt werden können. Darüber hinaus ist es durch einen derartigen modularen Aufbau eines Gargutträgers, der eine Größen- und/oder Formveränderung in zerstörungsfreier reversibler Weise ermöglicht auch gegeben, dass der Gargutträger zum Reinigen in eine Spülmaschine bzw. einen Geschirrspüler eingebracht werden kann.

Unter einer modulartigen Ausgestaltung ist auch ein puzzleartiger Aufbau zu verstehen.

Vorzugsweise ist vorgesehen, dass der Gargutträger ein erstes Trägermodul aufweist, welches eine Koppeleinrichtung aufweist, mit welcher eine Verbindung mit zumindest einem zweiten Trägermodul des Gargutträgers erzeugbar ist. In nutzerfreundlicher und einfach handhabbarer Weise kann somit eine schnelle und sichere Verbindung zwischen zwei Trägermodulen des Gargutträgers geschaffen werden. Die Größen- und/oder Formveränderung ist dadurch sehr einfach durchführbar.

Die Trägermodule sind so ausgebildet, dass sie zum modularen Aufbau der Gargutträger mechanisch koppelbar sind.

Insbesondere sind die Trägermodule als flächige Auflagen konzipiert, die gleiche Größe oder auch unterschiedliche Größe aufweisen können. Auch im Hinblick auf die Formgebung können diese Trägermodule gleich oder unterschiedlich gestaltet sein. Durch diese Flexibilität kann ein gesamter Gargutträger ganz individuell aufgebaut und gestaltet werden. Je nach Anforderungsbedürfnissen kann er somit verändert werden. Die modulare Verbindung der Trägermodule ermöglicht somit größenmäßig, formmäßig und funktionell eine hohe Veränderungsvielfalt des Gargutträgers.

Vorzugsweise ist vorgesehen, dass die Koppeleinrichtung zerstörungsfrei lösbar ist. Dadurch können die Trägermodule auch vollständig voneinander separiert werden, sodass im Hinblick auf die weitere Nutzung, beispielsweise Reinigung oder dergleichen ein wesentlicher Vorteil erzielt ist.

Vorzugsweise ist vorgesehen, dass die Koppeleinrichtung eine Steckverbindung ist. Diese kann sehr schnell ein Verbinden und Lösen der Trägermodule durchführen. Darüber hinaus ist sie mechanisch sehr stabil und belastbar.

Vorzugsweise ist vorgesehen, dass die Koppeleinrichtung zur Verrastung mit dem zweiten Trägermodul ausgebildet ist. Insbesondere in Verbindung mit dem Stecken kann somit einerseits die mechanisch stabile Verbindung gewährleistet werden und andererseits ein unerwünschtes Trennen der verbundenen Trägermodule verhindert werden. Darüber hinaus ist auch eine Verrastung sehr schnell und einfach lösbar, sodass beim Trennen der Trägermodule auch hier eine nutzerfreundliche Ausgestaltung erreicht ist.

Vorzugsweise ist vorgesehen, dass die Koppeleinrichtung zumindest eine scharnierartige Schwenkverbindung aufweist, mit welcher die Trägermodule schwenkbar verbunden sind. Insbesondere ist bei einer derartigen Ausgestaltung eine zerstörungsfrei lösbare Verbindung zwischen den Trägermodulen nicht vorgesehen. Es kann jedoch auch eine derartige zerstörungsfrei lösbare Schwenkverbindung ausgebildet sein.

Durch eine derartige Ausgestaltung der Koppeleinrichtung mit einer scharnierartigen Schwenkverbindung können die Trägermodule auch in spezifischen Winkelstellungen zueinander angeordnet werden. Insbesondere können sie in ihren Endschwenkstellungen entweder in einer Ebene angeordnet sein, sodass eine maximale Auflagefläche erzeugt ist und die Trägermodule quasi aneinander angereiht angeordnet sind. In der zweiten Endschwenkstellung sind sie insbesondere völlig überlappend angeordnet, sodass quasi nur die Größe eines Trägermoduls zur Verfügung steht.

Es kann auch vorgesehen sein, dass die Koppeleinrichtung eine Verschiebeverbindung aufweist, wobei dann die beiden Trägermodule in ihren jeweilig ausgebildeten Ebenen relativ zueinander verschoben werden können, insbesondere ineinander geschoben werden können. Dadurch können auch kontinuierliche ebene Flächenveränderungen erzeugt werden, die stufenlos zwischen der maximalen Ausgestaltung, wenn beide Trägermodule überlappungsfrei direkt aneinander angeordnet sind, bis hin zu einer minimalen Konfiguration, bei der die beiden Trägermodule vollständig übereinander geschoben sind, reicht.

Es kann auch vorgesehen sein, dass die Koppeleinrichtung beispielsweise eine scharnierartige Schwenkverbindung und eine Verschiebeverbindung aufweist, sodass die oben genannten Funktionalitäten umfänglich bereitgestellt sind und somit die variable Ausgestaltung und Handhabung des Gargutträgers nochmals erhöht ist.

Vorzugsweise ist vorgesehen, dass die Schwenkverbindung eine Arretiereinheit aufweist, mit welcher die Trägermodule in ihren beiden Endschwenkstellungen arretierbar sind. Dies ist dahingehend vorteilhaft, da somit die Position der Trägermodule in diesen Endschwenkstellungen fixiert ist und kein unerwünschtes Verschwenken einhergeht. Eine entsprechende Ausgestaltung kann auch bei einer Verschiebeverbindung vorgesehen sein.

Vorzugsweise ist vorgesehen, dass die Arretiereinheit eine Verschiebehülse aufweist, wobei abhängig von der Verschiebeposition der Verschiebehülse die Schwenkverbindung freigegeben oder gesperrt ist. Eine derartige Ausgestaltung der Arretiereinheit ist besonders einfach für einen Nutzer handhabbar, sodass das Lösen oder Sperren der Schwenkverbindung schnell und zuverlässig erfolgt.

Vorzugsweise ist vorgesehen, dass die Verschiebehülse durch eine Feder vorgespannt angeordnet ist. Zum Einen kann somit ein Vergessen des Verschiebens der Verschiebehülse in die sperrende Position verhindert werden. Andererseits ist dadurch die sperrende Verschiebeposition der Verschiebehülse sicher gehalten und ein selbstständiges Lösen oder Verschieben der Verschiebehülse ist verhindert.

Vorzugsweise ist vorgesehen, dass die scharnierartige Schwenkverbindung einstückig mit den Trägermodulen ausgebildet ist. Durch eine derartige Integration können Bauteilen eingespart werden und Positionstoleranzen vermieden werden. Des Weiteren wird eine mechanisch sehr belastbare Ausführung ermöglicht.

Vorzugsweise ist vorgesehen, dass die Schwenkverbindung aus Trägerstäben der Trägermodule gebildet ist, insbesondere in Trägerstäbe integriert ausgebildet ist. Die oben genannten Vorteile können dadurch nochmals begünstigt werden. Insbesondere kann dadurch auch die Kopplung und Separierung und auch die Verschwenkung dauerhaft mit hoher Funktionalität und ohne ein Verbiegen ermöglicht werden.

Es kann auch vorgesehen sein, dass Zusatzteile an den Trägerstäben angebracht sind, beispielsweise Winkelstücke an den Trägerstäben angeschweißt sind, die diese scharnierartige Schwenkverbindung bilden.

Vorzugsweise ist ein Drehpunkt der Schwenkverbindung niveaumäßig unter einem Auflagebereich für Gargut und/oder ein Zubereitungsgefäß eines Trägermoduls ausgebildet. Dadurch kann eine Selbstfixierung der beiden gekoppelten und in der Endstellung bzw. Gebrauchsstellung angeordneten Trägermodule erreicht werden. Insbesondere tritt diese Funktionalität der Selbstfixierung im beladenen Zustand der Auflagebereiche auf. Ferner wird dadurch auch ein Durchhängen der verbundenen Trägermodule an der Koppelstelle verhindert.

Es ist vorzugsweise vorgesehen, dass ein Scharnierhaken der Schwenkverbindung an einem Trägerstab des Trägermoduls ausgebildet ist, wobei der Scharnierhaken als gebogener Stabbereich des Trägerstabs geformt ist. Der Scharnierhaken umfasst vorzugsweise eine Schlaufe, die insbesondere in Bügel des Scharnierhakens mündet, wobei die Bügel von dem horizontal verlaufenden Trägerstab nach unten gebogen sind und dann in die wieder im Wesentlichen horizontal angeordnete Schlaufe übergehen. Insbesondere das andere Trägermodul umfasst als Bauteil der Schwenkverbindung eine als Einhakbereich ausgebildete nach unten versetzte Biegung, die in dem Trägerstab dieses Trägermoduls ausgebildet, insbesondere geprägt ist.

Im verbundenen Zustand ist diese Biegung in dem Scharnierhaken eingehakt und der Mittelpunkt der Biegung im Querschnitt bildet insbesondere den Drehpunkt.

Vorzugsweise ist vorgesehen, dass die Trägermodule so verbunden sind, dass sie aufeinander faltbar sind. Dies ist insbesondere bei einer Schwenkverbindung vorgesehen. Auch bei der Verschiebeverbindung ist im Hinblick auf das Verschieben ein gefalteter Zustand im Kontext, wie er in der vorliegenden Erfindung zu verstehen ist, gegeben.

Vorzugsweise ist vorgesehen, dass der Gargutträger zumindest ein Trägermodul aufweist, welches als Gitterrost ausgebildet ist.

Insbesondere ist vorgesehen, dass der Gitterrost einen aus Auflagestäben, die beabstandet zueinander angeordnet sind, aufgebauten Auflagebereich für das Gargut aufweist, wobei die Auflagestäbe mit Trägerstäben verbunden sind und eine Koppeleinrichtung zum Verbinden von Trägermodulen des Gitterrosts an den Trägerstäben ausgebildet ist.

Es kann vorgesehen sein, dass der gesamte Gargutträger mit seinen Trägermodulen als Gitterrost ausgebildet ist und somit alle Trägermodule jeweils einen derartigen Gitterrost darstellen.

Es kann auch vorgesehen sein, dass zumindest ein Trägermodul als Wanne, insbesondere Backblech oder Grillpfanne bzw. Fettpfanne, ausgebildet ist.

Durch diese individuellen Ausgestaltungen von Trägermodulen kann in modulartigem Aufbau ermöglicht werden, dass unterschiedlichste Trägermodule miteinander gekoppelt werden und somit verschiedenste gesamte Gargutträger gestaltet werden können.

Wesentlich ist auch, dass jedes Trägermodul selbst zur Auflage von Gargut und/oder einem Zubereitungsgefäß ausgebildet ist.

Im Hinblick auf den modularen Aufbau und die Kopplung von Trägermodulen miteinander ist hier vorgesehen, dass diese Trägermodule auch tatsächlich miteinander verbunden sind und verbunden werden, wenn der Gargutträger als Gesamtmodul aus zumindest zwei Trägermodulen ausgebildet ist. Im Hinblick auf eine Verbindung wird hier auf eine explizit ausgebildete mechanische Kopplung hingewiesen, sodass ein bloßes Aneinanderschieben von zwei Komponenten, die mechanisch nicht durch eine Koppeleinrichtung verbunden sind, nicht vorgesehen ist. Dies bedeutet, dass dann wenn der Gargutträger zumindest zwei Trägermodule aufweist, diese dann auch haltend miteinander verbunden sind.

Des Weiteren betrifft die Erfindung ein Gargerät mit einem Gargutträger gemäß der Erfindung oder einer vorteilhaften Ausgestaltung davon.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines Gargutträgers mit zwei getrennt voneinander angeordneten Trägermodulen;
- Fig. 2: die Trägermodule gemäß Fig. 1 im modular gekoppelten Zustand;
- Fig. 3: eine vergrößerte Darstellung eines Teilausschnitts von Fig. 2;
- Fig. 4: einen aufeinandergestapelten Zustand der beiden Trägermodule gemäß dem Gargutträger in Fig. 1 bis Fig. 3;
- Fig. 5: eine perspektivische Darstellung eines weiteren Ausführungsbeispiels eines erfindungsgemäßen Gargutträgers;
- Fig. 6: eine vergrößerte Darstellung des Gargutträgers gemäß Fig. 5;
- Fig. 7: eine weitere Darstellung des Gargutträgers gemäß Fig. 5 und Fig. 6 in einer weiteren spezifischen Stellung der Trägermodule zueinander;
- Fig. 8: eine perspektivische Darstellung des Gargutträgers gemäß Fig. 5 bis Fig. 7 in einer weiteren spezifischen Stellung der Trägermodule zueinander;
- Fig. 9: eine schematische Darstellung eines weiteren Ausführungsbeispiels eines erfindungsgemäßen Gargutträgers in spezifischer Stellung von Trägermodulen zueinander;
- Fig. 10: eine weitere schematische Darstellung eines weiteren Ausführungsbeispiels eines erfindungsgemäßen Gargutträgers in spezifischer Position der Trägermodule zueinander.
- Fig. 11: eine perspektivische Darstellung eines weiteren Ausführungsbeispiels eines erfindungsgemäßen Gargutträgers;
- Fig. 12: eine vergrößerte Darstellung eines Teilbereichs des Gargutträgers gemäß Fig. 11;
- Fig. 13: eine perspektivische Darstellung des Gargutträgers gemäß Fig. 11 und 12 mit zwei getrennt voneinander angeordneten Trägermodulen;
- Fig. 14: einen aufeinandergestapelten Zustand der beiden Trägermodule gemäß dem Gargutträger in Fig. 11 bis Fig. 13; und
- Fig. 15: eine vergrößerte Schnittdarstellung eines Teilbereichs des Gargutträgers gemäß Fig. 11 bis 14 an der Stelle einer scharnierartigen Schwenkverbindung.

In den Figuren werden gleiche oder funktionsgleiche mit den gleichen Bezugszeichen versehen.

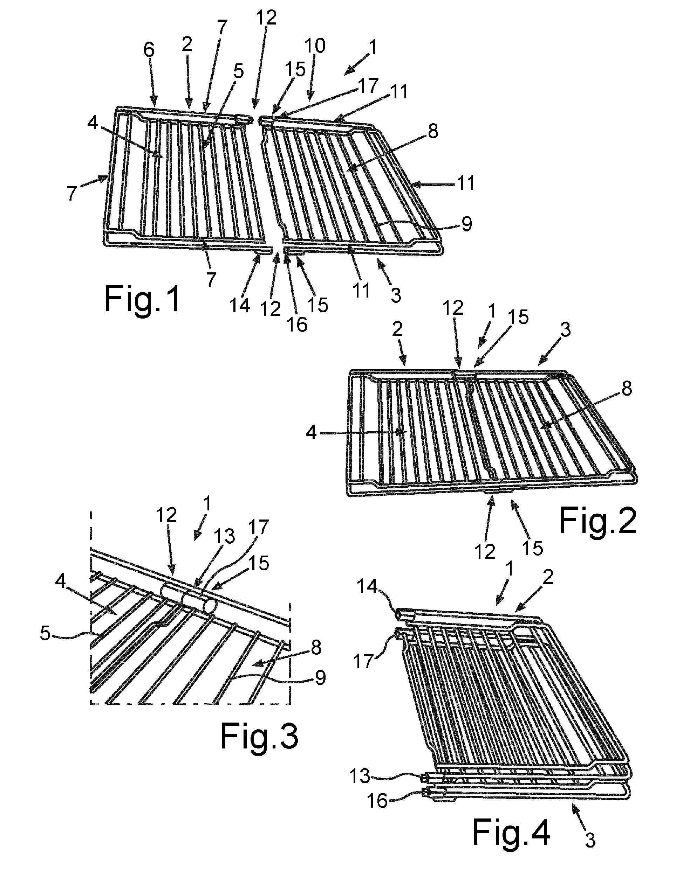

In Fig. 1 ist ein Gargutträger 1 gezeigt, auf dem Gargut direkt oder in Verbindung mit einem Zubereitungsgefäß aufgestellt werden kann.

Der Gargutträger ist modular aufgebaut und umfasst dazu im Ausführungsbeispiel zwei Trägermodule 2 und 3, die als separate Bauteile ausgebildet und bereitgestellt sind. Im Ausführungsbeispiel ist vorgesehen, dass beide Trägermodule 2 und 3 als Gitterroste ausgestaltet sind. Im Hinblick auf ihre Größe und Formgebung sind die beiden Trägermodule 2 und 3 praktisch gleich gestaltet. Der gesamte Gargutträger 1 kann somit durch seinen modularen Aufbau in Form und Größe individuell und variabel gestaltet werden.

Es kann auch vorgesehen sein, dass zumindest eines der Trägermodule 2 und/oder 3 eine Wanne ist und somit beispielsweise als Backblech oder Grillpfanne ausgestaltet ist.

Das Trägermodul 2 weist einen Auflagebereich 4 auf, auf dem das Gargut und/oder das Zubereitungsgefäß aufgestellt werden kann. Der Auflagebereich 4 ist aus einer Vielzahl von parallel und beabstandet zueinander angeordneten Stäben 5 aufgebaut. Diese sind wiederum mit einem Trägerrahmen 6 verbunden, der eine Mehrzahl von Trägerstäben, von denen lediglich beispielhaft einige mit dem Bezugszeichen 7 versehen sind, ausgebildet ist.

In analoger Weise umfasst das Trägermodul 3 einen Auflagebereich 8, der analog aus Stäben 9 ausgebildet ist, die wiederum mit einem Trägerrahmen 10, der Trägerstäbe 11 aufweist, verbunden sind.

Wie aus der Darstellung in Fig. 1 zu erkennen ist, umfasst das Trägermodul 2 eine Koppeleinrichtung 12 die im Ausführungsbeispiel an den Trägerstäben 7 angebunden bzw. ausgebildet ist. In diesem Zusammenhang ist vorgesehen, dass die Koppeleinrichtung 12 einen Steckstift 13 aufweist, wobei an der gegenüberliegenden Seite die Koppeleinrichtung 12 eine Aufnahme 14 umfasst.

In komplementärer Ausgestaltung umfasst das Trägermodul 3 ebenfalls eine Koppeleinrichtung 15, die ebenfalls einen derartigen Steckstift 16 und eine Aufnahme 17 aufweist. Im Hinblick auf die Anordnung des Steckstifts 16 und der Aufnahme 17 sind diese in umgekehrter Lage zu dem Steckstift 13 und der Aufnahme 14 angeordnet. Dies bedeutet, dass im gekoppelten und modular verbundenen Zustand der beiden Trägermodule 2 und 3 der Steckstift 13 in die Aufnahme 17 eingesteckt ist und der Steckstift 16 in die Aufnahme 14 eingesteckt ist.

Vorzugsweise ist vorgesehen, dass die Koppeleinrichtungen 12 und 15 auch zur Verrastung ausgebildet sind, sodass der modular gekoppelte und verbundene Zustand der Trägermodule 2 und 3 nicht selbstständig lösbar ist. Als Verrastung wird hier auch ein Einschnappen oder ein Klipsen verstanden.

In Fig. 2 ist der modular gekoppelte Zustand der beiden Trägermodule 2 und 3 gezeigt, wobei somit ein gesamter Gargutträger 1 ausgebildet ist, der sich flächenmäßig und größenmäßig aus der Summe der beiden Trägermodule 2 und 3 ergibt. Der gesamte Auflagebereich dieses Gargutträgers 1 ergibt sich dann aus der Summe der Auflagebereiche 4 und 8 und ist somit quasi gegenüber einem Trägermodul 2 oder 3 verdoppelt.

In dieser gezeigten Ausführung gemäß Fig. 1 und Fig. 2 ist im verbunden Zustand der beiden Trägermodule 2 und 3 keine weitere Bewegung, insbesondere keine Verschiebe-oder Verschwenkbewegung zwischen den beiden Trägermodulen 2 und 3 möglich.

In Fig. 3 ist in einer vergrößerten Darstellung ein Teilausschnitt des Gargutträgers 1 gemäß der Darstellung in Fig. 2 gezeigt. Der ineinandergesteckte Zustand der Koppeleinrichtungen 12 und 15 ist dargestellt.

In Fig. 4 ist in perspektivischer Darstellung der Gargutträger 1 gezeigt, wobei hier die beiden Trägermodule 2 und 3 in vertikaler Richtung gestapelt und übereinander angeordnet sind. Die analoge Ausgestaltung ist hierbei zu erkennen. In derartig gestapelter Ausführung kann ein sehr platzsparendes Verstauen der Trägermodule 2 und 3 ermöglicht werden. Ebenso ist eine einfache Reinigung der separierten Trägermodule 2 und 3 möglich, insbesondere können sie auch in einem Geschirrspüler zur Reinigung eingebracht werden.

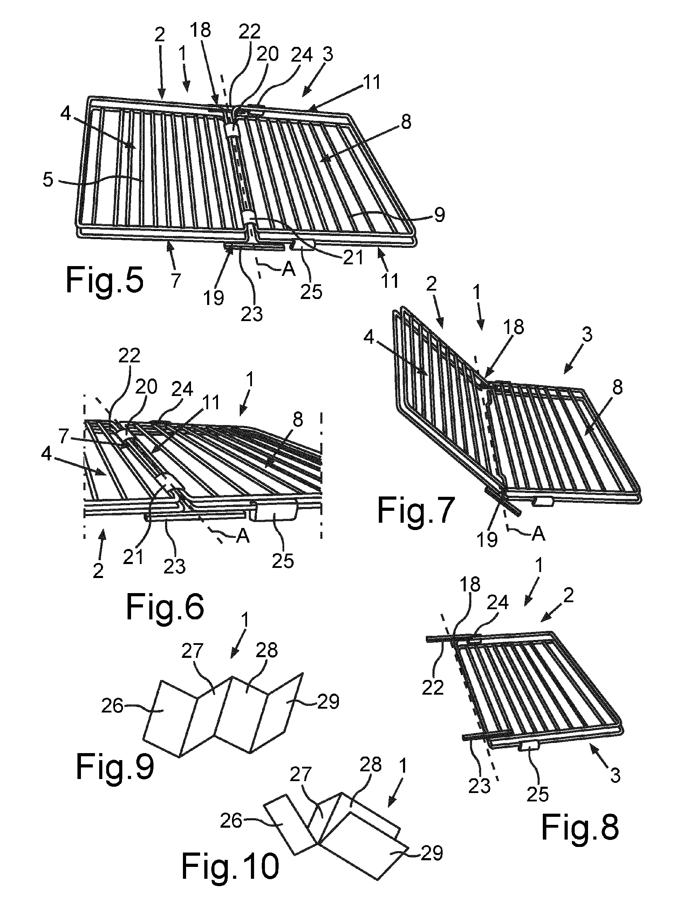

In Fig. 5 ist in einer perspektivischen Darstellung ein weiteres Ausführungsbeispiel eines erfindungsgemäßen Gargutträgers gezeigt, welcher modular aufgebaut ist und somit in seiner Größe und/oder Formgebung flexibel variabel gestaltbar ist. Im Unterschied zur Ausgestaltung gemäß Fig. 1 bis 4 ist hier vorgesehen, dass keine Steckverbindungen ausgebildet sind, sondern scharnierartige Schwenkverbindungen 18 und 19 ausgebildet sind. Insbesondere ist hier vorgesehen, dass die Trägermodule 2 und 3 dauerhaft miteinander verbunden sind. Die beiden Trägermodule 2 und 3 können über die Achse A relativ zueinander verschwenkt werden. In Fig. 1 ist hierbei eine erste Endschwenkstellung gezeigt, bei der die Trägermodule 2 und 3 quasi in einer Ebene nebeneinander angeordnet sind und somit eine maximale Fläche zur Auflage von Gargut und/oder Zubereitungsgefäßen ausgebildet ist.

Die scharnierartigen Schwenkverbindungen 18 und 19 umfassen im Ausführungsbeispiel in Richtung der Achse A verschiebbare Verschiebehülsen 20 und 21. Diese sind darüber hinaus insbesondere auch durch eine Feder vorgespannt. Dadurch kann eine sperrende Verschiebeposition der Verschiebehülsen 20 und 21 wieder vorgespannt gehalten werden. Ein unerwünschtes Verschwenken oder gar Zusammenklappen der Trägermodule 2 und 3, wie sie in der Stellung gemäß Fig. 5 gezeigt sind, kann dadurch verhindert werden.

In Fig. 6 ist ein perspektivischer Teilausschnitt der Darstellung in Fig. 5 gezeigt. Die flachbauenden Verschiebehülsen 20 und 21 sind dargestellt. Insbesondere ist hier vorgesehen, dass die Schwenkverbindungen 18 und 19 an den einander zugewandten Trägerstäben 7 und 11 der Trägermodule 2 und 3 angeordnet bzw. mit diesen gekoppelt sind.

In Fig. 7 ist der Gargutträger 1 gemäß Fig. 5 und Fig. 6 in einer Position gezeigt, bei der die beiden Trägermodule 2 und 3 in einem Winkel größer 0° und kleiner 180° zueinander schräg gestellt zueinander angeordnet sind.

In Fig. 8 ist der Gargutträger 1 dann in einer zweiten Endschwenkstellung gezeigt, bei der die beiden Trägermodule 2 und 3 direkt übereinander liegend angeordnet sind.

Der Gargutträger 1 gemäß Fig. 5 bis Fig. 8 kann alternativ und bevorzugt auch dahingehend ausgestaltet sein, dass eine Arretiereinheit mit axial verschiebbaren Verschiebehülsen 20 und 21 nicht in die scharnierartige Schwenkverbindung 18 und 19 quasi integriert ist, sondern separat dazu ausgebildet ist. Bei einer derartigen Ausgestaltung ist dann vorgesehen, dass die Schwenkverbindungen 18 und 19 keinerlei derartige Verschiebehülsen aufweisen, sondern lediglich einen vielfältigst gestaltbaren Schwenkmechanismus aufweisen. Es ist dann vorgesehen, dass an einem der Trägermodule stiftartige Koppelelemente 22 und 23 einer Arretiereinheit angeordnet sind, insbesondere an seitlichen Trägerstäben 7 befestigt, insbesondere angeschweißt sind. Diese erstrecken sich gradlinig vorzugsweise parallel zu den Trägerstäben 7 nach vorne über und können mit verschiebbar angeordneten Verschiebehülsen 24 und 25 der Arretiereinheit verbunden werden. Dazu ist in Fig. 5 und Fig. 6 der freigegebene Zustand gezeigt. Wird die Arretiereinheit gesperrt, so ist vorgesehen, dass die Verschiebehülsen 24 und 25 mit den Elementen 22 und 24 verbunden werden, sodass der in Fig. 5 gezeigte Zustand, in dem die Trägermodule 2 und 3 in der ersten Endschwenkstellung angeordnet sind, arretiert ist. Auch hier können die Verschiebehülsen 24 und 25 durch jeweils eine Feder vorgespannt angeordnet sein. Wie zu erkennen ist, sind die Verschiebehülsen 24 und 25 zumindest bereichsweise hohl ausgebildet und an den seitlichen Trägerstäben 11 verschiebbar befestigt. Im gesperrten Zustand dieser Arretiereinheit erstrecken sich dann diese Elemente 22 und 23 in die Verschiebehülsen 24 und 25 hinein, sodass ein unerwünschtes Verschwenken der Trägermodule 2 und 3 relativ zueinander um die Achse A verhindert ist.

In Fig. 9 ist in einer schematischen Darstellung ein weiteres Ausführungsbeispiel eines Gargutträgers 1 gezeigt, der eine Mehrzahl von Trägermodulen 26, 27, 28 und 29 aufweist. Diese sind quasi in Reihe zueinander angeordnet und durch Schwenkverbindungen miteinander gekoppelt, sodass der Gargutträger 1 auch beliebig gefaltet werden kann. Eine spezifische Faltstellung ist hier in Fig. 9 dargestellt. Auch hier kann somit im vollständig entfalteten Zustand eine Ebene geschaffen werden, die sich in Summe aus den Flächen der Trägermodule 26 bis 29 ergibt.

In Fig. 10 ist in einer weiteren schematischen Darstellung ein weiteres Ausführungsbeispiel eines Gargutträgers 1 gezeigt, der ebenfalls eine Mehrzahl von Trägermodulen 26 bis 29 aufweist, wobei diese hier nicht in einer Reihe zueinander angeordnet sind, sondern modular dahingehend aufgebaut ist, dass der gesamte Gargutträger 1 quasi aus vier Quadranten gebildet ist, wobei hier die Trägermodule 26 bis 29 dann so angeordnet sind, dass im völlig entfalteten Zustand des Gargutträgers 1 jedes Trägermodul 26 bis 29 an zumindest zwei weitere Trägermodule 26 bis 29 direkt angrenzt.

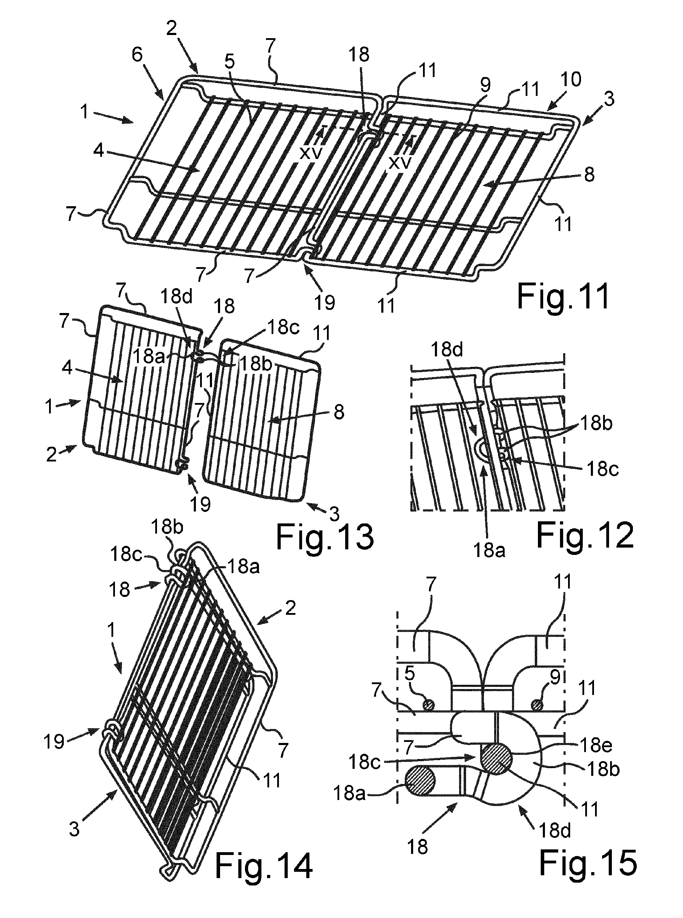

In Fig. 11 ist in einer perspektivischen Darstellung ein weiteres Ausführungsbeispiel eines Gargutträgers 1 gezeigt. Im Unterschied zur Ausführung gemäß Fig. 5 bis 8 ist hier vorgesehen, dass die scharnierartigen Schwenkverbindungen 18, 19 integriert in die Trägermodule 2 und 3 ausgebildet sind und somit einstückig mit den Trägermodulen 2 und 3 ausgebildet sind. Die Schwenkverbindungen 18 und 19 sind hier in Trägerstäbe 7 und 11 integriert. Dazu ist vorgesehen, dass ein Scharnierhaken 18d (Fig. 12 bis 15) an einem Trägerstab 7 des Trägermoduls 2 ausgebildet ist, der als gebogener Stabbereich des Trägerstabs 7 geformt ist. Der Scharnierhaken 18d umfasst eine Schlaufe 18a, die in Bügel 18b mündet, wobei die Bügel 18b von dem horizontal verlaufenden Trägerstab 7 nach unten gebogen sind und dann in die wieder im Wesentlichen horizontal angeordnet Schlaufe 18a übergehen. Im in Fig. 11 gezeigten gekoppelten Zustand der Trägermodule 2 und 3 ist der Scharnierhaken 18d mit einer als Einhakbereich ausgebildeten nach unten versetzten Biegung 18c des anderen Trägerstabs 11 des Trägermoduls 3 ausgebildet. Ein Drehpunkt 18e der Schwenkverbindung 18 ist niveaumäßig unter den Auflagebereichen 4 und 8 angeordnet und somit in y-Richtung unter den Stäben 5 und 7 angeordnet. Die Schwenkverbindung 19 ist analog ausgebildet.

In Fig. 12 ist eine vergrößerte Darstellung des Teilbereichs mit der Schwenkverbindung 18 gezeigt.

In Fig. 13 ist der separierte Zustand der Trägermodule 2 und 3 gezeigt.

In Fig. 14 ist der zusammengeklappte Zustand der Trägermodule 2 und 3 gezeigt.

In Fig. 15 ist eine Schnittdarstellung des Gargutträgers 1 in Fig. 11 entlang der Schnittlinie XV-XV in einem Teilbereich gezeigt und die Schwenkverbindung 18 gezeigt.

Auch bei den Ausführungen gemäß Fig. 5 bis Fig. 15 kann vorgesehen sein, dass die Trägermodule mit unterschiedlicher Form und/oder mit unterschiedlicher Funktionalität ausgestattet sind. Somit kann auch hier vorgesehen sein, dass zumindest eines der Trägermodule eine Wanne ist.

### Bezugszeichenliste

| | |
|---|---|
| 1 | Gargutträger |
| 2 | Trägermodul |
| 3 | Trägermodul |
| 4 | Auflagebereich |
| 5 | Stab |
| 6 | Trägerrahmen |
| 7 | Trägerstab |
| 8 | Auflagebereich |
| 9 | Stab |
| 10 | Trägerrahmen |
| 11 | Trägerstab |
| 12 | Koppeleinrichtung |
| 13 | Steckstift |
| 14 | Aufnahme |
| 15 | Koppeleinrichtung |
| 16 | Steckstift |
| 17 | Aufnahme |
| 18 | Schwenkverbindung |
| 18a | Schlaufe |
| 18b | Bügel |
| 18c | Biegung |
| 18d | Scharnierhaken |
| 18e | Drehpunkt |
| 19 | Schwenkverbindung |
| 20 | Verschiebehülse |
| 21 | Verschiebehülse |
| 22 | Koppelelement |
| 23 | Koppelelement |
| 24 | Verschiebehülse |
| 25 | Verschiebehülse |
| 26 | Trägermodul |
| 27 | Trägermodul |
| 28 | Trägermodul |
| 29 | Trägermodul |

## Patentansprüche

1. Gargutträger (1), **dadurch gekennzeichnet, dass** er modular aufgebaut ist.

2. Gargutträger (1) nach Anspruch 1, **dadurch gekennzeichnet, dass** er ein erstes Trägermodul (2, 3, 26 bis 29) zur Aufnahme von Gargut und/oder einem Zubereitungsgefäß aufweist, welches eine Koppeleinrichtung (12, 15, 18, 19) aufweist, mit welcher eine Verbindung mit zumindest einem zweiten Trägermodul (2, 3, 26 bis 29) welcher zur Aufnahme von Gargut und/oder einem Zubereitungsgefäß ausgebildet ist, erzeugbar ist.

3. Gargutträger (1) nach Anspruch 2, **dadurch gekennzeichnet, dass** die Koppeleinrichtung (12, 15, 18, 19) zerstörungsfrei lösbar ist.

4. Gargutträger (1) nach Anspruch 3, **dadurch gekennzeichnet, dass** die Koppeleinrichtung eine Steckverbindung (12, 15) umfasst.

5. Gargutträger (1) nach Anspruch 3 oder 4, **dadurch gekennzeichnet, dass** die Koppeleinrichtung (12, 15, 18, 19) zur Verrastung der Trägermodule (2, 3, 26 bis 29) ausgebildet ist.

6. Gargutträger (1) nach Anspruch 2, **dadurch gekennzeichnet, dass** die Koppeleinrichtung zumindest eine scharnierartige Schwenkverbindung (18, 19) aufweist, mit welcher die Trägermodule (2, 3, 26 bis 29) schwenkbar verbunden sind.

7. Gargutträger (1) nach Anspruch 6, **dadurch gekennzeichnet, dass** die Schwenkverbindung (18, 19) eine Arretiereinheit (20, 21, 22, 23, 24, 25) aufweist, mit welcher die Trägermodule (2, 3, 26 bis 29) in zumindest einer Endschwenkstellung arretierbar sind.

8. Gargutträger (1) nach Anspruch 7, **dadurch gekennzeichnet, dass** die Arretiereinheit zumindest eine Verschiebehülse (20, 21, 24, 25) aufweist, wobei abhängig von der Verschiebeposition die Schwenkverbindung (18, 19) freigegeben oder gesperrt ist.

9. Gargutträger (1) nach Anspruch 8, **dadurch gekennzeichnet, dass** die Verschiebehülse (20, 21, 24, 25) federvorgespannt angeordnet ist.

10. Gargutträger (1) nach Anspruch 6 oder 7, **dadurch gekennzeichnet, dass** die Schwenkverbindung (18, 19) einstückig mit den Trägermodulen (2, 3, 26 bis 29) ausgebildet ist.

11. Gargutträger (1) nach Anspruch 10, **dadurch gekennzeichnet, dass** die Schwenkverbindung (18, 19) aus Trägerstäben (7, 11) der Trägermodule (2, 3, 26 bis 29) gebildet ist, insbesondere in Trägerstäbe (7, 11) integriert ist.

12. Gargutträger (1) nach Anspruch 10 oder 11, **dadurch gekennzeichnet, dass** ein Drehpunkt (18e) der Schwenkverbindung (18, 19) niveaumäßig unter einem Auflagebereich (4, 8) eines Trägermoduls (2, 3, 26 bis 29) ausgebildet ist.

13. Gargutträger (1) nach einem der Ansprüche 2 bis 12, **dadurch gekennzeichnet, dass** die Trägermodule (2, 3, 26 bis 29) so verbunden sind, dass sie aufeinander faltbar sind.

14. Gargutträger (1) nach einem der Ansprüche 2 bis 13, **dadurch gekennzeichnet, dass** zumindest ein Trägermodul (2, 3, 26 bis 29) als Gitterrost ausgebildet ist.

15. Gargutträger (1) nach Anspruch 14, **dadurch gekennzeichnet, dass** der Gitterrost einen aus Auflagestäben (5, 9), die beabstandet zueinander angeordnet sind, aufgebauten Auflagebereich (4, 8) für das Gargut und/oder ein Zubereitungsgefäß aufweist, wobei die Auflagestäbe (5, 9) mit Trägerstäben (7, 11) verbunden sind und eine Koppeleinrichtung (12, 15, 18, 19) zum Verbinden von Trägermodulen (2, 3, 26 bis 29) an den Trägerstäben (7, 11) des Gitterrosts ausgebildet ist.

16. Gargutträger (1) nach einem der Ansprüche 2 bis 15, **dadurch gekennzeichnet, dass** zumindest ein Trägermodul als Wanne, insbesondere Backblech oder Grillpfanne, ausgebildet ist.

17. Gargerät mit einem Gargutträger (1) nach einem der vorhergehenden Ansprüche.
